# EUROPÄISCHE PATENTSCHRIFT

(11) **EP 2 862 767 B1**
(45) Veröffentlichungstag und Bekanntmachung des Hinweises auf die Patenterteilung: **24.04.2019**
(21) Anmeldenummer: 14003341.6
(22) Anmeldetag: 27.09.2014
(51) Int. Cl.: B60W 30/12, B60W 30/16, B60W 50/08

(54) **Kraftfahrzeug und Verfahren zur Steuerung eines Kraftfahrzeugs**
Method for controlling a motor vehicle and motor vehicle
Véhicule automobile et procédé de commande d'un véhicule automobile

(30) Priorität: 16.10.2013 DE 102013017212
(43) Veröffentlichungstag der Anmeldung: 22.04.2015
(73) Patentinhaber: AUDI AG, 85045 Ingolstadt (DE)
(72) Erfinder: Danzl, Martin, DE - 83115 Neubeuern (DE); Wüst, Sabine, DE - 85051 Ingolstadt (DE); Gollewski, Torsten, DE - 85080 Gaimersheim (DE); Kienzl, Georg, DE - 85055 Ingolstadt (DE); Hagemann, Franz-Michael, 85120 Hepberg (DE); Siedersberger, Karl-Heinz, 86669 Königsmoos (DE); Miehling, Thomas, DE - 85057 Ingolstadt (DE); Kunsch, Peter, DE - 85123 Karlskron (DE)
(74) Vertreter: Thielmann, Frank

(56) Entgegenhaltungen:
- DE-A1- 10 036 276
- DE-A1-102008 008 172
- DE-A1-102008 040 077
- DE-A1-102009 050 941
- DE-A1-102011 111 895
- DE-A1-102011 121 440

## Beschreibung

Die Erfindung betrifft ein Kraftfahrzeug, umfassend wenigstens ein Fahrerassistenzsystem, wobei das Kraftfahrzeug in einem ersten Betriebsmodus des Fahrerassistenzsystems durch einen Fahrer steuerbar ist.

Moderne Kraftfahrzeuge weisen eine Vielzahl von Fahrerassistenzsystemen auf, die der Steigerung der Fahrsicherheit und/oder des Fahrkomforts dienen. Insbesondere sind Fahrerassistenzsysteme bekannt, die abhängig von einem Ist-Zustand des Kraftfahrzeugs in die Steuerung der Kraftfahrzeugsysteme eingreifen, wie beispielsweise Antiblockiersysteme oder Spurstabilisierungssysteme. Daneben sind Komfortsysteme wie Spurhalteassistenzsysteme oder automatische Abstandsregelungen bekannt, die aus Egodaten und Umfelddaten eines Kraftfahrzeugs Voraussagen über künftige Fahrsituationen berechnen und das Kraftfahrzeug entsprechend dieser Voraussagen steuern. Es ist bekannt, dass diese teilautonomen Steuersysteme Steueraufgaben häufig mit einer geringeren Reaktionszeit und einer höheren Genauigkeit durchführen als ein menschlicher Fahrer. Damit kann ein autonomer Fahrbetrieb in vielen Fahrsituationen zu einem verbesserten Fahrverhalten des Fahrzeugs gegenüber einer Steuerung durch einen menschlichen Fahrer führen.

Um die Vorteile der schnelleren und genaueren Steuerung des Kraftfahrzeugs bei einem autonomen Fahrbetrieb zur Verbesserung der Sicherheit zu nutzen, ist es bekannt, Systeme einzusetzen, die drohende Kollisionen mit weiteren Kraftfahrzeugen erkennen und versuchen, diese Kollisionen zu vermeiden beziehungsweise die Auswirkungen der Kollisionen zu verringern.

Greift ein Fahrerassistenzsystem jedoch erst dann in das Fahrgeschehen ein, wenn eine Kollision unmittelbar bevorsteht, ist es häufig nicht mehr möglich, diese Kollision zu vermeiden.

Daher greifen einige Fahrassistenzsysteme bereits dann in den Fahrbetrieb ein, wenn eine Fahrsituation vorliegt, in der ein Teil der Fahrer von Kraftfahrzeugen nicht korrekt reagiert und damit potentiell eine Situation herbeiführt, in der eine Kollisionsgefahr besteht. Eine solche Situation ist insbesondere das Abkommen von der Straße. Bereits bei einem geringfügigen Abkommen von der Straße überreagieren Fahrer häufig und steuern sehr stark gegen. Dies kann jedoch dazu führen, dass das Kraftfahrzeug in den Gegenverkehr gesteuert wird und/oder zu schleudern beginnt. Daher wird durch dieses starke Lenken beim Abkommen von der Straße das Risiko einer zukünftigen Kollision stark erhöht.

Es sind Systeme bekannt, die bei Erkennen eines Abkommens von der Straße die möglichen Lenkwinkel einschränken um das beschriebene zu starke Lenken des Fahrers, das das Unfallrisiko erhöht, zu verhindern. Ein Einschränken des Lenkbereichs beim Abkommen von der Straße schränkt jedoch die Fahrmöglichkeiten ein, durch die das Kraftfahrzeug auf die Straße zurückgeführt werden kann. Es ist daher bei Verwendung eines solchen Systems für den Fahrer häufig nicht möglich, optimal auf eine umgebende Verkehrssituation zu reagieren.

Solche Systeme sind beispielsweise aus DE102009050941 A1, DE102011121440A1, DE102008040077A1 und DE102011111895A1 bekannt.

Der Erfindung liegt damit die Aufgabe zugrunde, ein Kraftfahrzeug anzugeben, das ein demgegenüber verbessertes Fahrerassistenzsystem aufweist.

Die Aufgabe wird erfindungsgemäß durch ein Kraftfahrzeug der eingangs genannten Art gelöst, bei dem das Fahrerassistenzsystem ausgebildet ist, bei einem durch. Auswertung von das Kraftfahrzeug betreffenden Egodaten und/oder das Kraftfahrzeugumfeld betreffenden Umfelddaten mit einer Wahrscheinlichkeit, die eine vorgegebene Mindestwahrscheinlichkeit übersteigt, ermittelten zukünftigen und/oder einem erfolgten Verlassen der Fahrbahn temporär in einen zweiten Betriebsmodus umzuschalten, in dem die Lenkung des Kraftfahrzeugs ohne Eingriffsmöglichkeit durch den Fahrer autonom durch das Fahrerassistenzsystem erfolgt, wobei das Fahrerassistenzsystem im zweiten Betriebsmodus zur Bestimmung einer Position innerhalb der Fahrbahn als Zielposition für den autonomen Fahrbetrieb ausgebildet ist, an der die prognostizierte Verkehrssituation, nämlich die Straßenführung, eine sichere Rückübergabe der Fahrzeugführung an den Fahrer erlaubt.

Der Erfindung liegt die Idee zugrunde, einem Fahrer im "normalen" Fahrbetrieb die größtmögliche Handlungsfreiheit zu lassen, jedoch in Fahrsituationen, in denen das Kraftfahrzeug die Fahrbahn bereits verlassen hat oder in denen ein zeitnahes Verlassen der Fahrbahn sehr wahrscheinlich ist, zumindest die Lenkung des Kraftfahrzeugs temporär vollständig autonom durchzuführen, d. h. das Kraftfahrzeug ohne eine Eingriffsmöglichkeit des Fahrers zu lenken.

Ein Verlassen der Fahrbahn oder das Befahren einer Trajektorie, die mit hoher Wahrscheinlichkeit zum Verlassen der Fahrbahn führt, kann beispielsweise durch eine Auswertung von Bilddaten wenigstens einer am Kraftfahrzeug angeordneten Kamera detektiert werden. Beispielsweise kann eine Frontkamera aus einer Folge von mehreren Bildern sowohl die Position der Straßenbegrenzung als auch die Bewegungsrichtung und Geschwindigkeit des Kraftfahrzeugs ermitteln. Damit kann direkt festgestellt werden, wenn eine Fahrbahnbegrenzung überfahren wird und das Kraftfahrzeug die Straße verlässt. Es kann auch prognostiziert werden, ob das Kraftfahrzeug bei einem Beibehalten der Fahrtrichtung innerhalb eines vorgegebenen Zeitintervalls von beispielsweise einigen 100 ms die Fahrbahn verlassen wird.

Ebenso können die Position und Bewegung des Kraftfahrzeugs bezüglich der Fahrbahnbegrenzung aus Positionsinformationen einer Positionsbestimmungseinrichtung, beispielsweise eines GPS-Systems, bestimmt werden, wobei die Positionsdaten mit hochauflösenden Kartendaten, die im Kraftfahrzeug vorhanden sind oder auf die drahtlos zugegriffen werden kann, abgeglichen werden können.

Selbstverständlich können auch eine Vielzahl weiterer Sensoren und Informationen genutzt werden, um ein erfolgtes oder zukünftiges Verlassen der Fahrbahn zu erkennen. So können beispielsweise die Daten von Drehzahlsensoren der Räder ausgewertet werden um plötzliche Änderungen des Schlupfs eines Rades zu ermitteln, was ebenfalls ein Indiz für das Verlassen der Fahrbahn sein kann.

Es ist eine Vielzahl von unterschiedlichen Sensoren zur Ermittlung von Umfelddaten und unterschiedlichen Positionsbestimmungseinrichtungen bekannt. Auch Methoden zur Berechnung eines Umfeldmodells sowie eines Dynamikmodells aus vorliegenden Ego- und Umfelddaten sind dem Fachmann geläufig. Auch diese bekannten Sensoren und Methoden können selbstverständlich im erfindungsgemäßen Kraftfahrzeug genutzt werden, insofern sie erlauben, eine Position oder eine Position und eine Bewegung des Kraftfahrzeugs bezüglich einer Fahrbahnbegrenzung zu bestimmen bzw. zu prognostizieren.

Der Bereich, der im erfindungsgemäßen Kraftfahrzeug als Fahrbahn erkannt wird, kann insbesondere auch je nach Kraftfahrzeug unterschiedlich sein, einstellbar sein oder von weiteren Informationen, wie beispielsweise einem eingestellten oder ermittelten Fahrertyp, abhängig sein. So wird bei einem sportlichen Fahren typischerweise die Straße bis zum Rand ausgenutzt und es ist auch möglich, dass Randsteine oder Randbereiche als befahrbar gelten und mitbenutzt werden können. Andererseits ist bei eher komfortorientierten Fahrern zu erwarten, dass sie einen gewissen Mindestabstand von einer Fahrbahnbegrenzung halten. Daher ist das eingangs erwähnte plötzliche und starke Lenken beim Verlassen der Fahrbahn, das zu Risikosituationen führen kann, bei diesem Fahrertyp bereits deutlich vor Verlassen der Fahrbahn zu erwarten. Diese unterschiedlichen Fahrweisen können dadurch berücksichtigt werden, dass die Mindestwahrscheinlichkeit für das Verlassen der Fahrbahn angepasst wird, ab der das Fahrerassistenzsystem in den zweiten Betriebsmodus wechselt, oder dadurch, dass bei der Ermittlung der Fahrbahnbegrenzung ein zusätzlicher Bereich zur Fahrbahn gerechnet wird oder ein gewisser Sicherheitsbereich aus dem Bereich, der als Fahrbahn betrachtet wird, ausgeschlossen wird.

Im erfindungsgemäßen Kraftfahrzeug soll vorzugsweise erreicht werden, dass der Fahrbetrieb des Kraftfahrzeugs im zweiten Betriebsmodus soweit möglich fortgesetzt wird. Falls das Fahrerassistenzsystem also ermittelt, dass das Kraftfahrzeug sicher auf die Fahrbahn zurückgeführt werden kann, wird das Kraftfahrzeug vom Fahrerassistenzsystem vorzugsweise derart auf die Fahrbahn zurückgeführt, dass der Fahrbetrieb möglichst wenig gestört wird.

Ein wesentliches Merkmal des erfindungsgemäßen Kraftfahrzeugs ist es, dass die autonome Lenkung des Kraftfahrzeugs nur temporär erfolgt. Damit kann das Fahrerassistenzsystem die Lenkung des Kraftfahrzeugs, sobald dies unter den gegebenen Umständen möglich ist, wieder an den Fahrer zurückübergeben. Das Fahrerassistenzsystem des erfindungsgemäßen Kraftfahrzeugs greift also in einer Situation ein, in der eine hohe Wahrscheinlichkeit besteht, dass ein Fahrer des Kraftfahrzeugs falsch reagiert, führt das Kraftfahrzeug vorzugsweise in eine Fahrsituation, in der eine sichere Rückübergabe der Lenkung an den Fahrer möglich ist, und übergibt die Lenkung des Kraftfahrzeugs anschließend wieder an den Fahrer.

Eine autonome Lenkung des Kraftfahrzeugs ist dann besonders gut zu realisieren, wenn das Kraftfahrzeug über eine Steer-by-wire- bzw. Drive-by-wire-Steuerung verfügt, bei der die Bewegung des Lenkrads und die Lenkung der Räder mechanisch entkoppelt sind. In diesem Fall kann das Lenkrad während des autonomen Fahrbetriebs von der Lenkung entkoppelt werden. Bei Beendigung des autonomen Fahrbetriebs kann sichergestellt werden, dass sich Lenkwinkel und Lenkradwinkel entsprechen und das Lenkrad kann wieder an die Lenkung gekoppelt werden.

Wesentliches Ziel des autonomen Lenkens ist es, das Kraftfahrzeug wieder auf die Fahrbahn zu steuern bzw. auf der Fahrbahn zu halten. Daher ist das Fahrerassistenzsystem im zweiten Betriebsmodus zur Bestimmung einer Position innerhalb der Fahrbahn als Zielposition für den autonomen Fahrbetrieb ausgebildet. Selbstverständlich können neben der Zielposition noch weitere Zielparameter für den autonomen Fahrbetrieb festgelegt werden.

So kann das Fahrerassistenzsystem zur Bestimmung einer Position zur Zielposition ausgebildet sein, an der ein prognostizierter Azimutwinkel zwischen Kraftfahrzeug und Fahrbahn einen vorgegebenen Maximalwert unterschreitet. Ziel der autonomen Lenkung des Kraftfahrzeugs ist es, das Kraftfahrzeug in eine Fahrsituation zu überführen, in der weder ein unmittelbares Verlassen der Fahrbahn droht noch ein ungewünschter Fahrspurwechsel, wobei insbesondere vermieden werden soll, dass das Kraftfahrzeug auf eine Gegenfahrspur bewegt wird. Zugleich soll das Kraftfahrzeug in einen kontrollierten Fahrzustand geführt werden, also insbesondere nicht schleudern. Da im Rahmen der Rückübergabe der Fahrzeugführung an einen Fahrer mit einer verlängerten Reaktionszeit des Fahrers auf eine Verkehrssituation zu rechnen ist, sollte das Kraftfahrzeug daher in eine Fahrsituation verbracht werden, in der es auf der Fahrbahn im Wesentlichen einer Fahrspur folgt. Das Folgen einer Fahrspur entspricht aber meist einem kleinen Azimutwinkel zwischen Fahrbahn und Kraftfahrzeug.

Das Fahrerassistenzsystem ist derart zur Bestimmung der Zielposition ausgebildet, dass an der Zielposition die prognostizierte Verkehrssituation, nämlich der Streckenverlauf, eine sichere Übergabe der Fahrzeugführung an den Fahrer erlaubt. Bei dem erfindungsgemäßen Kraftfahrzeug erfolgt zumindest die Lenkung des Kraftfahrzeugs vollständig autonom, das heißt, dass der Fahrer während der Zeit des Betriebs des Fahrerassistenzsystems im zweiten Betriebsmodus keinerlei Eingriffsmöglichkeit hat. Dies ist besonders einfach bei der Nutzung von Drive-by-Wire-Systemen möglich, bei denen die Lenkung der Räder mechanisch vollständig von der Bewegung des Lenkrads entkoppelt ist. Insbesondere bei solchen Systemen ist es vorteilhaft, wenn eine Rückübergabe der Kraftfahrzeugsteuerung an den Fahrer in einer Situation erfolgt, in der möglichst wenige Lenkbewegungen notwendig sind, da vor einem Wiederankoppeln des Lenkrads an die Lenkung der Räder eine Anpassung des Lenkwinkels an den Lenkradwinkel erfolgen muss. Die Anpassung des Lenkradwinkels bzw. des Lenkwinkels erfolgt jedoch über ein gewisses Zeitintervall und kann zur Störung der Fahrtrajektorie führen. Dies kann weitgehend kompensiert werden, wenn die Rückübergabe in einem geeigneten Bereich erfolgt, wobei es insbesondere vorteilhaft ist, wenn die Strecke relativ gerade ist und ein vorgegebener Mindestabstand zu weiteren Verkehrsteilnehmern eingehalten wird.

Das Fahrerassistenzsystem kann insbesondere zum Umschalten vom zweiten in den ersten Betriebsmodus bei Vorliegen wenigstens einer Rückschaltbedingung ausgebildet sein, wobei die oder eine der Rückschaltbedingungen ist, dass sich das Kraftfahrzeug vollständig auf der Fahrbahn befindet und/oder dass ein vorgegebene Azimutwinkel zwischen Kraftfahrzeug und Straße unterschritten ist und/oder dass die Verkehrssituation eine sichere Rückgabe der Fahrzeugführung an den Fahrer erlaubt und/oder dass die Zielposition erreicht ist.

Wie bereits erläutert ist es Ziel des autonomen Fahrens, das Kraftfahrzeug auf der Fahrbahn zu halten oder zurück auf die Fahrbahn zu führen, wobei es insbesondere dem Straßenverlauf folgen soll. Daher ist es vorteilhaft erst dann wieder in den ersten Betriebsmodus zu schalten und damit die Lenkung des Kraftfahrzeugs an den Fahrer zu übergeben, wenn diese beiden Ziele erreicht sind und sich das Kraftfahrzeug damit vollständig auf der Fahrbahn befindet und der Azimutwinkel klein ist. Daneben soll vorteilhaft eine sichere Rückübergabe an den Fahrer möglich sein, weshalb die Verkehrssituation bei der Auswertung der Rückschaltbedingung berücksichtigt werden kann. Wie bereits erläutert ist es möglich, dass diese Bedingungen bereits bei der Ermittlung der Zielposition überprüft wurden. Daher kann alternativ oder ergänzend als Rückschaltbedingung genutzt werden, dass die Zielposition erreicht ist. Selbstverständlich kann vor einem Rückschalten ergänzend überprüft werden, dass die Bedingungen zum Schalten in den zweiten Betriebsmodus nicht vorliegen.

Bei Erfüllung der genannten Rückschaltbedingungen ist es auch möglich, vor dem Wechsel in den ersten Betriebsmodus zunächst auf eine Fahrereingabe zu warten, die eine Absicht zur Rückübernahme der Fahrzeugkontrolle anzeigt. Dabei kann ein Hinweis an den Fahrer gegeben werden, dass eine Rückübernahme erfolgen soll.

Beim autonomen Fahren im zweiten Betriebsmodus ist es möglich, dass das Kraftfahrzeug auf einer zumindest abschnittsweise vorberechneten Trajektorie geführt wird. Es ist daher vorteilhaft, wenn das Fahrerassistenzsystem zur Bestimmung einer Steuertrajektorie zwischen der momentanen Position des Kraftfahrzeugs und der Zielposition und zur Steuerung des Kraftfahrzeugs entlang dieser Steuertrajektorie im zweiten Betriebsmodus ausgebildet ist. Zur Bestimmung von Trajektorien zum autonomen Fahren sind eine Vielzahl von Algorithmen bekannt. Besonders vorteilhaft können sogenannte "Best First"-Algorithmen genutzt werden. Bei dieser Art von Suchalgorithmus werden zunächst Trajektorien berechnet, die voraussichtlich auf besonders kurzem Weg oder besonders schnell zum Ziel führen. Beispielsweise kann ein A*-Algorithmus genutzt werden. Selbstverständlich können auch andere im Stand der Technik bekannte Algorithmen zur Bestimmung von Steuertrajektorien beim autonomen Fahren im erfindungsgemäßen Kraftfahrzeug genutzt werden.

Durch die erläuterte autonome Lenkung des Kraftfahrzeugs kann das Kraftfahrzeug bereits in einer Vielzahl von Fahrsituationen auf der Fahrbahn gehalten bzw. auf die Fahrbahn zurückgeführt werden, ohne weitere Verkehrsteilnehmer zu gefährden. Dennoch ist es vorteilhaft, im zweiten Betriebsmodus weitere Fahrzeugsysteme autonom durch das Fahrerassistenzsystem zu steuern. So kann das Fahrerassistenzsystem im zweiten Betriebsmodus zur autonomen Steuerung der Bremssysteme und/oder des Motors und/oder des vorzugsweise automatischen Getriebes des Kraftfahrzeugs ohne Eingriffsmöglichkeit durch den Fahrer ausgebildet sein. Insbesondere kann die gesamte Querführung oder die gesamte Längs- und Querführung des Kraftfahrzeugs durch das Fahrerassistenzsystem erfolgen. In diesem Fall kann das Kraftfahrzeug entlang beliebiger physikalisch durch das Kraftfahrzeug fahrbarer Trajektorien bewegt werden. Dies ist vorteilhaft, da bei ausschließlicher autonomer Lenkung des Kraftfahrzeugs unerwartete Eingriffe des Fahrers in andere Steuersysteme die Führung des Kraftfahrzeugs entlang der berechneten Trajektorie stören können. Eine vollständig autonome Quer- oder Quer- und Längsführung des Kraftfahrzeugs ermöglicht zudem ein flexibleres Eingreifen des Fahrerassistenzsystems bei veränderlichen Fahrsituationen, so dass die Trajektorie des Kraftfahrzeugs, insbesondere bei überraschend auftretenden Verkehrssituationen, besser und schneller angepasst werden kann.

Wenn das Fahrerassistenzsystem auch in die Längsführung des Kraftfahrzeugs eingreift, können auch Sollgeschwindigkeiten für die Führung des Kraftfahrzeugs entlang der Steuertrajektorie bestimmt werden. So können die Positionen und Geschwindigkeiten weiterer Kraftfahrzeuge, insbesondere durch am Kraftfahrzeug angeordnete Sensoren und/oder durch Fahrzeug-zu-Fahrzeug-Kommunikation, ermittelt werden und die Sollgeschwindigkeiten derart bestimmt werden, dass der weitere Verkehrsfluss beim Rückfahren auf die Straßen nicht oder nur minimal gestört wird.

Ein besonders angenehmes Fahrerlebnis wird erreicht, wenn die Geschwindigkeit des Kraftfahrzeugs im Wesentlichen beibehalten wird, d. h., solange dies sicher möglich ist, und den geltenden Verkehrsregeln entspricht, mithin die Geschwindigkeit des Kraftfahrzeugs bei Abschluss des autonomen Fahrbetriebs im Wesentlichen der Geschwindigkeit des Kraftfahrzeugs bei Beginn des autonomen Fahrbetriebs bzw. bei Verlassen der Fahrbahn entspricht.

Einige Fahrzeugsysteme sind üblicherweise nicht direkt durch einen Fahrer steuerbar. Beispielsweise sind in einigen Kraftfahrzeugen die Räder des Kraftfahrzeugs einzeln bremsbar, wobei jedoch keine Bedienmöglichkeit für einen Fahrer vorgesehen ist. Es ist daher insbesondere möglich, dass das Fahrerassistenzsystem ausgebildet ist, wenigstens ein Fahrzeugsystem, dessen Steuerung nicht direkt durch einen Fahrer möglich ist, insbesondere eine Bremseinrichtung für Einzelräder, autonom zu steuern.

Um eine optimale Rückführung des Kraftfahrzeugs auf die Fahrbahn zu erreichen, ist es häufig vorteilhaft, wenn besonders enge Wenderadien gefahren werden können bzw. wenn das Kraftfahrzeug so geführt werden kann, dass es im Wesentlichen parallel verschoben wird, ohne seinen Azimutwinkel zu ändern. Um eine derartige Führung des Kraftfahrzeugs zu ermöglichen, ist es vorteilhaft, wenn das Kraftfahrzeug wenigstens ein lenkbares Hinterrad aufweist, wobei das Fahrerassistenzsystem im zweiten Betriebsmodus zur Steuerung des Lenkwinkels des lenkbaren Hinterrads ausgebildet ist.

Bei Kraftfahrzeugen mit Hinterradlenkung ist die Lenkung des Hinterrads häufig, insbesondere in Abhängigkeit eines Schaltzustandes oder Fahrzustandes des Kraftfahrzeugs, insbesondere der Geschwindigkeit, an die Lenkung des Vorderrads gekoppelt. Typischerweise wird bei höheren Geschwindigkeiten das Hinterrad gleichsinnig mit dem Vorderrad gelenkt, so dass eine Parallelverschiebung des Kraftfahrzeugs bei einer nur geringen Änderung des Azimutwinkels möglich ist. Bei niedrigen Geschwindigkeiten werden besonders kleine Lenkradien ermöglicht, indem die Hinterräder gegensinnig zu den Vorderräder gelenkt werden. Zur schnellen und komfortablen Rückführung eines Kraftfahrzeugs auf eine Fahrbahn ist es jedoch vorteilhaft, wenn das Fahrerassistenzsystem im zweiten Betriebsmodus zur separaten Steuerung eines Lenkwinkels wenigstens eines Vorderrades und eines Lenkwinkels wenigstens eines Hinterrades ausgebildet ist. Bei Kraftfahrzeugen, die zwei Vorderräder und zwei Hinterräder aufweisen, kann hierbei die die Lenkung der beiden Vorderräder sowie die Lenkung der beiden Hinterräder jeweils gemeinsam gesteuert werden. In diesem Fall kann die Hinterradlenkung des Kraftfahrzeugs als unabhängiger Parameter im Rahmen der Optimierung einer Steuertrajektorie genutzt werden.

Bei einem Betrieb des Fahrerassistenzsystems im zweiten Betriebsmodus werden dem Fahrer zumindest Teile der Kraftfahrzeugführung entzogen. Zudem kann es zu überraschenden Beschleunigungen in Längs- oder Querrichtung des Kraftfahrzeugs kommen. Daher ist es vorteilhaft, wenn das Fahrerassistenzsystem zum Ansteuern einer Hinweiseinrichtung zur Gabe eines akustischen, haptischen und/oder optischen Hinweises beim Umschalten in den zweiten Betriebsmodus und/oder vor Umschalten in den ersten Betriebsmodus, als Hinweis zur Fahrerübernahme, ausgebildet ist. Ein Hinweis zur Fahrerübernahme ist vorteilhaft, um den Fahrer darauf hinzuweisen, dass er nun wieder für die Führung des Kraftfahrzeugs verantwortlich sein soll.

Das Kraftfahrzeug kann eine Kommunikationseinrichtung zur drahtlosen Fahrzeug-zu-Fahrzeugkommunikation und/oder zur drahtlosen Fahrzeug-zu-Infrastrukturkommunikation aufweisen, wobei das Fahrerassistenzsystem zur Ermittlung von Umgebungsdaten durch Ansteuerung der Kommunikationseinrichtung zur Kommunikation mit Informationsquellen und/oder zur Kommunikation mit anderen Kraftfahrzeugen zur Übertragung von Warnhinweisen, insbesondere beim Umschalten in den zweiten Betriebsmodus, ausgebildet ist. Insbesondere können durch die Kommunikationseinrichtung Informationen über wenigstens ein weiteres Kraftfahrzeug, beispielsweise dessen Position, Geschwindigkeit, Lenkwinkel, Trajektorie und/oder geplantes Manöver empfangen werden. Durch diese Informationen kann die Bewegungsvoraussage für dieses Kraftfahrzeuge verbessert werden, wodurch eine zuverlässigere Planung des eigenen Fahrbetriebs möglich ist. Es ist jedoch auch möglich, über die Kommunikationseinrichtung auf externe Datenbanken zuzugreifen. Datenbanken können insbesondere Informationen in einem fahrzeugeigenen Navigationssystem ersetzen oder ergänzen. Zur zuverlässigen Trajektorienberechnung sind exakte Informationen über den Verlauf der Fahrbahn, insbesondere Neigungswinkel, Steigungen, Kurvenradien und Ähnliches notwendig. Sind solche Daten nicht im Kraftfahrzeug oder einem Navigationssystem gespeichert, so können sie, insbesondere bereits zeitlich beabstandet vor dem Befahren des entsprechenden Straßenabschnitts, drahtlos aus einer Datenbank abgerufen werden.

Eine Gabe eines Warnsignals an weitere Fahrzeuge ist insbesondere vorteilhaft, da im zweiten Betriebsmodus das eigene Kraftfahrzeug die Fahrbahn bereits verlassen hat oder mit hoher Wahrscheinlichkeit ein Verlassen der Fahrbahn erfolgt. Damit werden im zweiten Betriebsmodus mit erhöhter Wahrscheinlichkeit unerwartete Fahrmanöver oder Fahrmanöver an den physikalischen Grenzen des Kraftfahrzeugs durchgeführt. Es ist daher für andere Kraftfahrzeug vorteilhaft, einen zusätzlichen Sicherheitsabstand zum eigenen Kraftfahrzeug zu wahren.

Es ist auch möglich, dass die Kommunikationseinrichtung Fahrhinweise an die anderen Kraftfahrzeuge überträgt. Dies kann in Situationen, in denen ein kontrolliertes Rückfahren auf die Fahrbahn nicht möglich ist, erfolgen. In diesem Fall kann mit dem Fahrhinweis eine Prioritätsinformation übertragen werden, die anzeigt, dass sich das Kraftfahrzeug in einer Notsituation befindet. Dabei ist es möglich, dass das Kraftfahrzeug und/oder die weiteren Kraftfahrzeuge ausgebildet sind, Fahrhinweisen, die mit einer Prioritätsinformation übertragen werden, zu folgen, soweit dies sicher möglich ist. Folgt wenigstens ein weiteres Kraftfahrzeug dem Fahrhinweis, so kann es dadurch ermöglicht werden, das eigene Kraftfahrzeug sicher abzustellen oder auf die Straße zurückzuführen.

Nach einem erfolgreichen Vermeiden des Verlassens der Fahrbahn oder einer Rückführung des Kraftfahrzeugs auf die Fahrbahn soll eine Rückübergabe der Fahrzeugführung an den Fahrer und damit ein Umschalten vom zweiten Betriebsmodus in den ersten Betriebsmodus erfolgen. Das Fahrerassistenzsystem kann bei einem Umschalten vom zweiten Betriebsmodus in den ersten Betriebsmodus zum Warten auf eine Eingabe eines Fahrers zur Fahrerübernahme und einem Umschalten in den ersten Modus erst nach einer erkennbaren Fahrerreaktion, die eine Rückübernahme anzeigt, ausgebildet sein. Dies ist besonders vorteilhaft, da in diesem Fall das Kraftfahrzeug solange weiter autonom durch das Fahrerassistenzsystem geführt wird, bis sichergestellt ist, dass der Fahrer tatsächlich die Führung des Kraftfahrzeugs übernimmt. Insbesondere ist es möglich, in Fahrsituationen, in denen ein Umschalten in den ersten Betriebsmodus möglich ist, einen Hinweis an den Fahrer zu geben, um anzuzeigen, dass er die Führung des Kraftfahrzeugs übernehmen soll.

Daneben betrifft die Erfindung ein Verfahren zur Steuerung eines Kraftfahrzeugs, umfassend wenigstens ein Fahrerassistenzsystem, wobei das Kraftfahrzeug in einem ersten Betriebsmodus des Fahrerassistenzsystems durch einen Fahrer steuerbar ist, umfassend die Schritte:
- Erfassen von das Kraftfahrzeug betreffenden Egodaten und/oder das Kraftfahrzeugumfeld betreffenden Umfelddaten,
- Ermitteln, ob das Kraftfahrzeug eine Fahrbahn verlassen hat oder die Fahrbahn zukünftig mit einer Wahrscheinlichkeit, die eine vorgegebene Mindestwahrscheinlichkeit überschreitet, verlassen wird durch Auswertung der Egodaten und/oder der Umfelddaten durch das Fahrerassistenzsystem, und in diesem Fall
- temporäreres Umschalten in den zweiten Betriebsmodus des Fahrerassistenzsystems und
- autonomes Lenken des Kraftfahrzeugs ohne Eingriffsmöglichkeit des Fahrers durch das Fahrerassistenzsystem im zweiten Betriebsmodus, wobei durch das Fahrerassistenzsystem eine Position innerhalb der Fahrbahn als Zielposition für den autonomen Fahrbetrieb bestimmt wird, an der die prognostizierte Verkehrssituation, nämlich die Straßenführung, eine sichere Rückübergabe der Fahrzeugführung an den Fahrer erlaubt.
Die weiteren Vorteile und Einzelheiten der Erfindung ergeben sich aus den folgenden Ausführungsbeispielen und den zugehörigen Zeichnungen. Dabei zeigen:
- Fig. 1: ein Ausführungsbeispiel des erfindungsgemäßen Kraftfahrzeugs,
- Fig. 2: eine Verkehrssituation,
- Fig. 3: eine weitere Verkehrssituation,
- Fig. 4: eine dritte Verkehrssituation,
- Fig. 5: eine vierte Verkehrssituation,
- Fig. 6: eine fünfte Verkehrssituation, und
- Fig. 7: ein Ablaufdiagramm für ein Ausführungsbeispiel des erfindungsgemäßen Verfahrens.

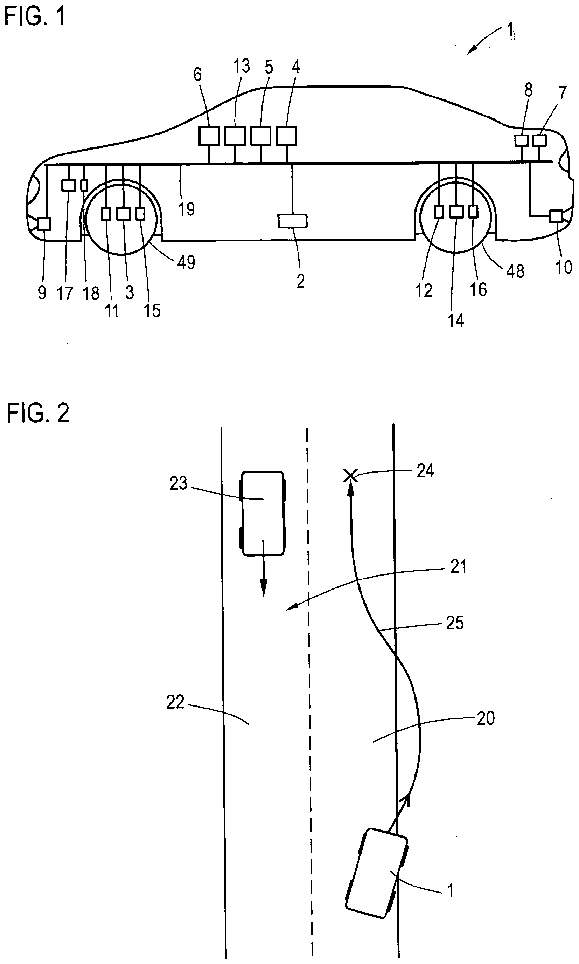

Fig. 1 zeigt ein Kraftfahrzeug 1 mit einem Fahrerassistenzsystem 2, das durch Auswertung von das Kraftfahrzeug betreffenden Egodaten und das Kraftfahrzeugumfeld betreffenden Umfelddaten erkennen kann, ob das Kraftfahrzeug eine Fahrbahn verlassen hat oder ob es die Fahrbahn mit einer gewissen Mindestwahrscheinlichkeit verlassen wird. Wurde ein hochwahrscheinliches Verlassen oder ein erfolgtes Verlassen der Fahrbahn ermittelt, so wechselt das Fahrerassistenzsystem 2 in einen zweiten Modus, in dem das Fahrerassistenzsystem 2 das Kraftfahrzeug autonom steuert.

Zur Ermittlung, ob das Kraftfahrzeug 1 eine Fahrbahn verlassen hat oder hochwahrscheinlich verlassen wird, kann das Fahrerassistenzsystem 2 über den CAN-Bus 19 mit einer Vielzahl von weiteren Einrichtungen des Kraftfahrzeugs kommunizieren. So kann über das GPS-System 7 eine Fahrzeugposition ermittelt werden. Mit Hilfe der Fahrzeugposition kann eine Position des Kraftfahrzeugs auf einer digitalen Karte ermittelt werden, die im Navigationssystem 6 gespeichert ist. Bereits anhand von hochaufgelösten GPS-Daten und einer digitalen Karte kann es möglich sein zu ermitteln, ob das Kraftfahrzeug eine Fahrbahn verlassen hat oder sie hochwahrscheinlich verlassen wird.

Mit Hilfe der Kommunikationseinrichtung 8 kann drahtlos auf zusätzliche Datenbanken zugegriffen werden, um insbesondere besseres Kartenmaterial und weitere Umfeldinformationen zu ermitteln. Die Kommunikationseinrichtung kann beispielsweise durch ein funkzellenbasiertes Ortungssystem zur Verbesserung der Positionsinformation genutzt werden. Über die Kameras 9 und 10 sowie weitere nicht gezeigte Sensoren können Umfelddaten ermittelt werden, wobei die Sensordaten, also insbesondere die Bilder der Kameras 9 und 10, direkt durch das Fahrerassistenzsystem 2 ausgewertet werden können. Es ist jedoch auch möglich, dass Teile der Sensordaten bereits vorverarbeitet sind, wobei beispielsweise eine separate Bildverarbeitungseinrichtung oder die Ausgabedaten weiterer Fahrerassistenzsysteme, die Sensordaten verarbeiten, genutzt werden können.

Das Fahrerassistenzsystem 2 wertet zudem auch Daten von Sensoren aus, die fahrzeuginterne Parameter erfassen. So kann aus den Drehzahldaten der Raddrehzahlsensoren 11, 12 ermittelt werden, ob plötzliche Änderungen der Haftungsverhältnisse für eines oder mehrere Räder ermittelt werden, die darauf hinweisen können, dass das Rad die Fahrbahn verlassen hat. Das Fahrerassistenzsystem nutzt die gesammelten Ego- und Umfelddaten, um ein Umfeldmodell sowie ein Dynamikmodell für das eigene Kraftfahrzeug zu berechnen. Alternativ wäre es auch möglich, im Fahrerassistenzsystem 2 aus den Daten von einem oder mehreren der Sensoren jeweils einzeln das Erfolgen des Verlassens der Fahrbahn oder eine Wahrscheinlichkeit für ein zukünftiges Verlassen der Fahrbahn zu bestimmen und die einzelnen Bestimmungsergebnisse logisch oder statistisch zu verknüpfen.

Wird durch das Fahrerassistenzsystem 2 nicht ermittelt, dass das Kraftfahrzeug die Fahrbahn verlassen hat oder sie mit hoher Wahrscheinlichkeit verlassen wird, so erfolgt die Führung des Kraftfahrzeugs durch den Fahrer. Das Kraftfahrzeug 1 wird durch ein Drive-by-Wire-System gesteuert. Dabei werden die Stellungen der Bedienelemente des Kraftfahrzeugs 1, beispielsweise der Lenkradwinkel des Lenkrads 4, durch Sensoren, wie den Lenkwinkelsensor 5, erfasst. Die Steuerung der Lenkung 3, 14, des Bremssystems 15, 16, des Motors 17 sowie des automatischen Getriebes 18 erfolgt elektronisch über den CAN-Bus 19 in Abhängigkeit der Sensordaten. Kraftfahrzeuge mit einem Drive-by-Wire-System sind besonders gut für einen autonomen oder teilautonomen Fahrbetrieb geeignet, da einzelne oder alle Bedienelemente von den zu steuernden Elementen des Kraftfahrzeugs 1 entkoppelt werden können, wodurch eine vollautonome Steuerung dieser Komponenten möglich ist, ohne die Bedienelemente bewegen zu müssen.

Ermittelt das Fahrerassistenzsystem 2, dass das Kraftfahrzeug die Fahrbahn bereits verlassen hat oder dass mit hoher Wahrscheinlichkeit, die einen Wahrscheinlichkeitsgrenzwert übersteigt, ein Verlassen der Fahrbahn zukünftig erfolgen wird, so wird die Hinweiseinrichtung 13 durch die Steuereinrichtung 2 angesteuert, um dem Fahrer des Kraftfahrzeugs 1 einen Hinweis zu geben, dass die Fahrbahn verlassen wurde oder hochwahrscheinlich verlassen wird und das Kraftfahrzeug 1 nun temporär autonom geführt wird. Die Hinweiseinrichtung 13 gibt einen akustischen Warnton aus und aktiviert eine Warnleuchte. Ergänzend oder alternativ wäre es möglich, dem Fahrer haptische Hinweise oder andere akustische oder optische Hinweise zu geben. Mit dem Wechsel in den zweiten Betriebsmodus wird durch das Fahrerassistenzsystem 2 zudem eine Zielposition für das Kraftfahrzeug ausgewählt, zu der ein autonomer Fahrbetrieb erfolgen soll. Da das Kraftfahrzeug vor allem auf der Fahrbahn gehalten bzw. auf die Fahrbahn zurückgeführt werden soll, ist ein wesentliches Merkmal der Zielposition, dass sie innerhalb der Fahrbahn liegt. Der Verlauf, die Form und die weiteren Eigenschaften der Fahrbahn können aus einem zuvor bestimmten Umfeldmodell bestimmt werden.

Das Fahrerassistenzsystem 2 ist zudem dazu ausgebildet, die Zielposition derart zu wählen, dass ein prognostizierter Azimutwinkel zwischen Kraftfahrzeug und Fahrbahn unterhalb eines vorgegebenen Maximalwerts liegt. Die Richtung der Fahrbahn kann hierbei der digitalen Karte, die in dem Navigationssystem 6 gespeichert ist, entnommen werden. Alternativ ist es auch möglich, den Verlauf einer Fahrbahn- und/oder Fahrspurbegrenzung, der beispielsweise durch eine Auswertung der Bilddaten der Kameras 9, 10 ermittelt wurde, insbesondere durch Mitteilung über einen Fahrbahnabschnitt vorgegebener Länge oder Berechnen einer Ausgleichsgeraden, auszuwerten, um eine Richtung der Fahrbahn zu bestimmen. Durch diese zusätzliche Randbedingung für die Zielposition wird erreicht, dass an der Zielposition eine Rückübergabe an den Fahrer besonders gut möglich ist, da das Kraftfahrzeug bereits derart ausgerichtet ist, dass es im Wesentlichen dem Straßenverlauf folgt. Soweit möglich wird bei der Bestimmung der Zielposition die Verkehrssituation und die Straßenführung im Bereich der Zielposition berücksichtigt. Zudem bestimmt das Fahrerassistenzsystem 2 eine Steuertrajektorie zwischen dem momentanen Ort des Kraftfahrzeugs und der Zielposition und führt das Kraftfahrzeug anschließend autonom entlang der Steuertrajektorie. Zur Führung des Kraftfahrzeugs steuert das Fahrerassistenzsystem den Motor 17, das automatische Getriebe 18, die Lenkung 3 und 14 und das Bremssystem 15 und 16 derart an, dass das Kraftfahrzeug der Steuertrajektorie folgt. Dabei werden die insbesondere die Bremssysteme 15, 16 derart gesteuert, dass eine unabhängige Bremsung der einzelnen Räder 48, 49 erfolgt und die Lenkung 14 der Hinterräder 48 wird separat von der Lenkung der Vorderräder 49 gesteuert.

Während des autonomen Fahrbetriebs ermittelt das Fahrerassistenzsystem 2 wiederholt aktuelle Umfeld- und Egodaten und passt das Umfeldmodell sowie das Dynamikmodell des eigenen Kraftfahrzeugs dynamisch an. Insbesondere können auch Dynamikmodelle für weitere erfasste Verkehrsteilnehmer und andere bewegte Objekte berücksichtigt werden. Nach Anpassung der Modelle wird überprüft, ob die aktuelle Steuertrajektorie noch sicher fahrbar ist und ob es sich weiterhin um eine optimale Trajektorie handelt. Anschließend kann, soweit notwendig, die Steuertrajektorie angepasst werden.

Ziel des autonomen Fahrbetriebs des Kraftfahrzeugs 1 ist es, das Kraftfahrzeug 1 zurück auf die Straße zu führen oder auf der Straße zu halten. Wenn dieses Ziel erreicht ist und zugleich eine sichere und komfortable Rückübergabe der Fahrzeugführung an den Fahrer möglich ist, soll das Fahrerassistenzsystem 2 diese Rückübergabe durchführen. Daher prüft das Fahrerassistenzsystem 2 während des autonomen Fahrbetriebs wiederholt, ob eine Rückschaltbedingung erfüllt ist. Die Rückschaltbedingung überprüft, ob sich das Fahrzeug vollständig auf der Fahrbahn befindet, der Azimutwinkel zwischen Kraftfahrzeug und Straße einen vorgegebenen Maximalwert nicht überschreitet und die Verkehrssituation eine sichere Rückgabe der Fahrzeugkontrolle an den Fahrer erlaubt. Sind diese Bedingungen erfüllt, so ist prinzipiell eine Rückgabe der Fahrzeugführung an den Fahrer möglich.

Um diese Rückübergabe durchzuführen, steuert das Fahrerassistenzsystem 2 die Hinweiseinrichtung 13 derart an, dass ein Rückübernahmehinweis an den Fahrer gegeben wird. Der Rückgübernahmehinweis erfolgt in Kraftfahrzeug 1 durch einen akustischen und optischen Hinweis. Nach Gabe des Rückübernahmehinweises setzt das Fahrerassistenzsystem 2 zunächst den autonomen Fahrbetrieb im zweiten Betriebsmodus fort. Zugleich überprüft das Fahrerassistenzsystem 2 jedoch ob eine Bedienhandlung durch den Fahrer durchgeführt wird, die eine gewünschte Rückübernahme der Fahrzeugführung durch den Fahrer anzeigt. Hierzu werden im Kraftfahrzeug 1 die Lenkbewegungen des Fahrers am Lenkrad 4 ausgewertet. Wurde eine entsprechende Fahrerhandlung erfasst, stellt das Fahrerassistenzsystem 2 zudem sicher, dass Lenkwinkel und Lenkradwinkel einander entsprechen. Ist auch diese Bedingung erfüllt, so kann das Fahrerassistenzsystem in den ersten Betriebsmodus wechseln und die Führung des Kraftfahrzeugs erfolgt wieder durch den Fahrer.

Fig. 2 zeigt eine Verkehrssituation, in der ein autonomer Fahrbetrieb des Kraftfahrzeugs 1 erfolgt. Kraftfahrzeug 1 befindet sich auf der rechten Spur 20 der Fahrbahn 21. Auf der Gegenfahrspur 22 kommt ein weiteres Kraftfahrzeug 23 entgegen. In Fig. 2 hat Kraftfahrzeug 1 die Fahrbahn 21 bereits teilweise verlassen, so dass sich zumindest das rechte Vorderrad jenseits der Fahrbahn 21 befindet.

In der in Fig. 2 gezeigten Fahrsituation reagieren viele Fahrer von Kraftfahrzeugen falsch und steuern ihr Kraftfahrzeug 1 stark nach links, wodurch die Gefahr besteht, dass das Kraftfahrzeug 1 ins Schleudern gerät oder auf die Fahrspur 22 fährt, wodurch die Gefahr einer Kollision mit Kraftfahrzeug 23 besteht. Daher schaltet das Fahrerassistenzsystem 2 des Kraftfahrzeugs 1, sobald ein Verlassen der Fahrbahn erkannt wird, in den zweiten Betriebsmodus, in dem das Kraftfahrzeug 1 autonom geführt wird. Beim Schalten in den zweiten Betriebsmodus wird eine Zielposition 24 für den autonomen Fahrbetrieb bestimmt, an der voraussichtlich eine Rückübergabe der Fahrzeugführung an den Fahrer des Kraftfahrzeugs 1 möglich ist. Anschließend wird eine Trajektorie 25 von der Ist-Position des Kraftfahrzeugs 1 zu der Zielposition 24 berechnet. Zur Berechnung der Trajektorie 25 kann beispielsweise ein A*-Algorithmus oder ein ähnlicher "Best-First"-Algorithmus genutzt werden. Die Berechnung der Trajektorie 25 erfolgt unter zahlreichen Randbedingungen, die insbesondere den maximalen Lenkwinkel des Kraftfahrzeugs und die maximale Quer- und Längsbeschleunigung abhängig von den erwarteten Reibkräften zwischen Reifen und Straße berücksichtigen können.

Die Trajektorie 25 kann selbstverständlich abhängig von Änderungen der Ego- oder Umfelddaten angepasst werden. Insbesondere ist es möglich, dass das Kraftfahrzeug 1 von der zunächst berechneten Trajektorie 25 abweicht. In diesem Fall kann der Fahrbetrieb soweit möglich auf die Trajektorie 25 zurückgeregelt werden. Es ist jedoch auch möglich, eine neue Trajektorie zu berechnen. Die Trajektorie 25 kann auch abschnittsweise berechnet werden. Dabei ist es möglich, zwischen dem Kraftfahrzeug 1 und der Zielposition 24 mehrere Wegpunkte zu ermitteln und die Trajektorien Wegpunkt für Wegpunkt zu ermitteln. Es ist auch möglich, dass zunächst keine Zielposition 24 berechnet wird und einzelne Fahreingriffe oder Trajektorien mit kurzer zeitlicher Länge bestimmt werden, um das Kraftfahrzeug 1 auf die Fahrbahn 21 zurückzuführen.

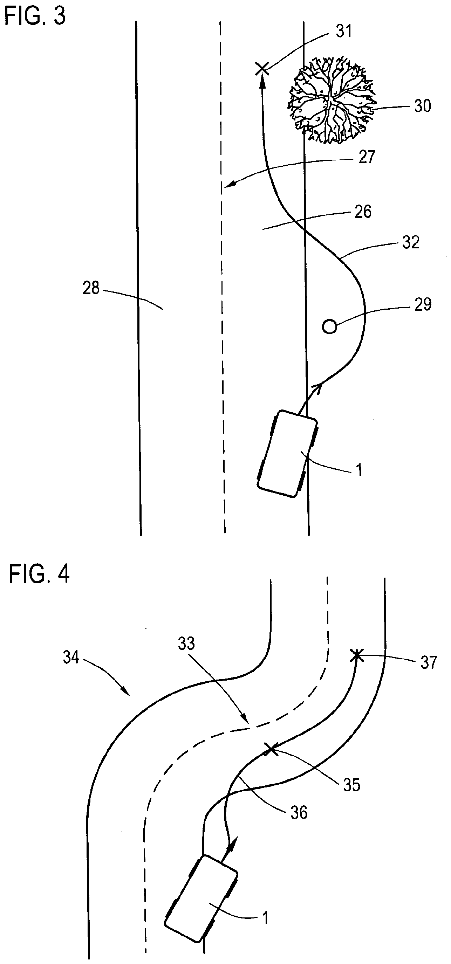

In der in Fig. 2 gezeigten Verkehrssituation ist die Bestimmung der Trajektorie 25 besonders einfach, da im Bereich zwischen Kraftfahrzeug 1 und Zielposition 24 keine Hindernisse vorhanden sind. Fig. 3 zeigt eine ähnliche Verkehrssituation, bei der jedoch Hindernisse vorhanden sind. Das Kraftfahrzeug 1 hat wiederum die Fahrbahn 27 verlassen. Auch in Fig. 3 soll das Kraftfahrzeug 1 durch den autonomen Fahrbetrieb im zweiten Betriebsmodus des Fahrerassistenzsystems 2 auf die rechte Fahrspur 26 zurückgeführt werden, ohne auf die Gegenfahrspur 28 zu fahren. Fig. 3 zeigt eine Verkehrssituation, bei der im Bereich neben der Fahrbahn 27 mehrere Hindernisse, nämlich ein Straßenschild 29 und ein Baum 30, vorhanden sind. Aufgrund dieser Hindernisse ist ein direktes Zurückführen des Kraftfahrzeugs 1 auf die Fahrbahn 27 in der Verkehrssituation der Fig. 3 nicht möglich. Sollte das Kraftfahrzeug 1 direkt auf die rechte Fahrspur 26 zurückgeführt werden, bestünde erhebliches Kollisionsrisiko mit dem Straßenschild 29. Da im Kraftfahrzeug 1 aufgrund der mit Bezug auf Fig. 1 erläuterten Ermittlung von Umfelddaten ein Daten zu dem Straßenschild 29 enthaltendes Umfeldmodell vorliegt, kann dennoch eine Trajektorie 32 zur Zielposition 31 bestimmt werden, die eine Kollision mit dem Straßenschild 29 und dem Baum 30 vermeidet. Hierzu werden bekannte Algorithmen zur Trajektorienplanung genutzt, wobei als Randbedingungen berücksichtigt wird, dass das Kraftfahrzeug 1 innerhalb eines Fahrschlauchs fahren muss, der einen Sicherheitsabstand zum Straßenschild 29 und Baum 30 hat.

Fig. 4 zeigt eine weitere Verkehrssituation, in der das Kraftfahrzeug 1 vor einer S-Kurve 34 von der Fahrbahn 33 abkommt. Wie erläutert ist es vorteilhaft, wenn die Zielposition für den autonomen Fahrbetrieb derart gewählt wird, dass sie auf der Fahrbahn 33 liegt und dass der prognostizierte Azimutwinkel zwischen Kraftfahrzeug 1 und Fahrbahn 33 unterhalb eines Maximalwertes liegt. Werden nun ausschließlich diese beiden Bedingungen berücksichtigt, so wäre es möglich, dass das Fahrerassistenzsystem 2 des Kraftfahrzeugs 1 die Position 35 als Zielposition bestimmt und die Trajektorie 36 zu dieser Zielposition berechnet. Werden die gleichen Bedingungen auch für den Wechsel in den ersten Betriebsmodus bzw. die Aufforderung an den Fahrer zur Rückübernahme genutzt, so würde das Fahrerassistenzsystem 2 des Kraftfahrzeugs 1 den Fahrer an Position 35 auffordern die Führung des Kraftfahrzeugs wieder zu übernehmen. In diesem Fall müsste der Fahrer des Kraftfahrzeugs 1 jedoch zeitnah nach der Rückübergabe der Fahrzeugführung eine Kurve durchfahren und damit aktiv und relativ stark in die Fahrzeugführung eingreifen. Da insbesondere im Rahmen der Rückübernahme des Fahrers die Lenkwinkel und Lenkradwinkel zur Übereinstimmung gebracht werden müssen, wofür eine gewisse Mindestzeit notwendig ist, wird die tatsächliche Rückübergabe voraussichtlich während des Durchfahrens der Kurve erfolgen.

Um dies zu vermeiden, ist das Fahrerassistenzsystem 2 des Kraftfahrzeugs 1 derart ausgebildet, dass es bei der Bestimmung der Zielposition und der Auswahl der Rückschaltebedingung die allgemeine Verkehrssituation und den Verlauf der Straße berücksichtigt. Damit vermeidet das Fahrerassistenzsystem eine Rückgabe der Fahrzeugführung in unruhigen Verkehrssituationen und an Stellen mit komplexer Streckenführung. In der gezeigten Verkehrssituation würde das Fahrerassistenzsystem somit die Zielposition 37 ermitteln und die Trajektorie 36 bis zur Zielposition 37 verlängern. An der Zielposition 37 und im darauffolgenden Straßenverlauf ist eine problemlose Rückübernahme der Fahrzeugführung durch den Fahrer möglich, da die Straße im Wesentlichen gerade verläuft.

Ein wesentliches Ziel des Umschaltens in den zweiten Betriebsmodus und damit der autonomen Fahrzeugführung ist es, Fehlbedienungen durch einen Fahrer beim Verlassen der Straße zu vermeiden. In vielen Fällen wird der Fahrer eines Kraftfahrzeugs jedoch schon reagieren, bevor das Kraftfahrzeug die Straße verlässt. Insbesondere, wenn diese Reaktion sehr kurz vor dem Verlassen der Fahrbahn erfolgt, ist jedoch ebenfalls zu befürchten, dass ein Fahrer zu stark gegenlenkt und damit das Kraftfahrzeug 1 ins Schleudern kommt oder in die Gegenfahrbahn einfährt.

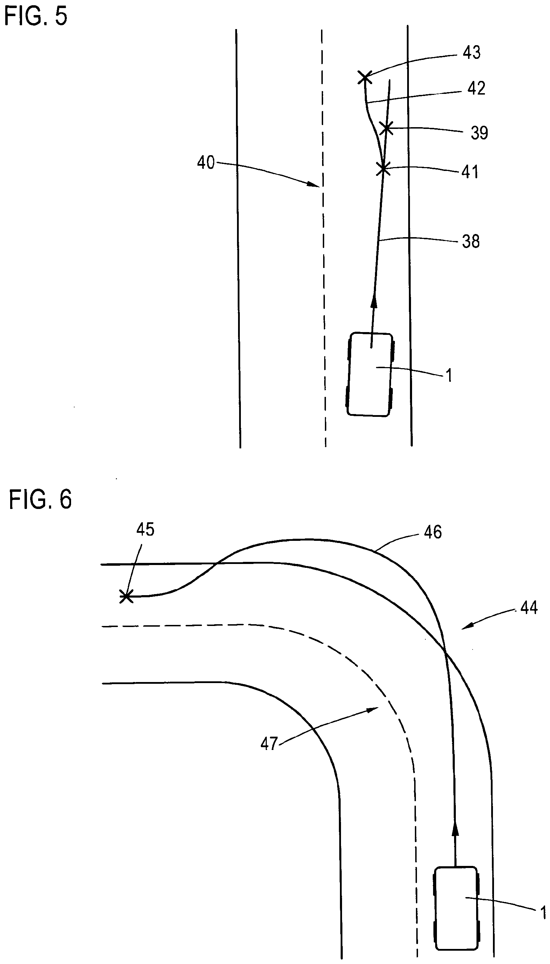

Daher ist das Fahrerassistenzsystem 2 des Kraftfahrzeugs 1 dazu ausgebildet, schon bei einem hochwahrscheinlichen Verlassen der Fahrbahn 40 durch das Kraftfahrzeug 1 in den zweiten Betriebsmodus zu wechseln und das Kraftfahrzeug autonom zu steuern. Dies ist in Fig. 5 beispielhaft für eine Verkehrssituation gezeigt. Das Kraftfahrzeug 1 bewegt sich hier auf der Fahrbahn 40, wobei die Fahrtrichtung des Kraftfahrzeugs 1 einen Winkel zum Verlauf der Fahrbahn aufweist. Ein solches gewinkeltes Fahren zur Straße ist typisch für einen normalen Fahrbetrieb, d. h. in der gezeigten Verkehrssituation soll das Fahrerassistenzsystem 2 des Kraftfahrzeugs 1 noch nicht in den zweiten Betriebsmodus wechseln. Insbesondere, wenn der Fahrer des Kraftfahrzeugs 1 in der gezeigten Fahrsituation unaufmerksam ist, ist es jedoch möglich, dass der Fahrer den Winkel zwischen Kraftfahrzeug 1 und Fahrbahn 40 nicht korrigiert und sich das Kraftfahrzeug 40 damit zunehmend auf den Rand der Fahrbahn 40 zubewegt. Diese Bewegung ist mit der Trajektorie 38 angedeutet. Folgt das Kraftfahrzeug 1 der Trajektorie 38, so würde das Kraftfahrzeug 1 bei Erreichen der Position 39 die Fahrbahn 40 verlassen, da der rechte vordere Reifen die Fahrbahnbegrenzung überquert. Mit zunehmender Annäherung des Kraftfahrzeugs 1 an Position 39 steigt die Wahrscheinlichkeit, dass der Fahrer die Trajektorie 38 nicht durch einen Lenkeingriff korrigiert. Sobald die Wahrscheinlichkeit, dass der Fahrer bis zum Erreichen der Position 39 die Trajektorie 38 nicht korrigiert und das Kraftfahrzeug 1 damit die Fahrbahn 40 verlässt, einen gewissen Grenzwert überschreitet, was an Punkt 41 der Fall ist, wechselt das Fahrerassistenzsystem 2 des Kraftfahrzeugs 1 in den zweiten Betriebsmodus, wodurch das Kraftfahrzeug 1 autonom geführt wird. In der Verkehrssituation von Fig. 5 wird ein Zielpunkt 43 bestimmt und eine Steuertrajektorie 42 zum autonomen Fahren zum Zielpunkt 43 berechnet. Mit Erreichen des Zielpunkts 43 kann eine Rückgabe der Fahrzeugführung an den Fahrer und ein Wechseln in den ersten Betriebsmodus, wie obig beschrieben, erfolgen.

Die in Fig. 5 gezeigte Verkehrssituation betrifft alle Fälle, in denen eine Führung des Kraftfahrzeugs 1 derart möglich ist, dass das Kraftfahrzeug 1 auf der Fahrbahn verbleibt. Der Eingriff in den Fahrbetrieb erfolgt also, da hochwahrscheinlich ist, dass ein Fahrer nicht rechtzeitig reagiert, um das Kraftfahrzeug auf der Fahrbahn zu halten. Es sind jedoch auch Situationen möglich, in denen ermittelt wird, dass mit hoher Wahrscheinlichkeit keine Trajektorie physikalisch möglich ist, die einen Verbleib des Kraftfahrzeugs auf der Fahrbahn ermöglicht. In der in Fig. 6 gezeigten Verkehrssituation bewegt sich das Kraftfahrzeug 1 mit hoher Geschwindigkeit auf die Kurve 44 zu. Das Fahrerassistenzsystem 2 des Kraftfahrzeugs 1 ermittelt in dieser Situation, dass keine Trajektorie möglich ist, auf der das Kraftfahrzeug 1 die Kurve 44 derart durchqueren kann, dass das Kraftfahrzeug 1 auf der Fahrbahn 47 verbleibt. Damit ist auch in der in Fig. 6 gezeigten Verkehrssituation die Bedingung für das Umschalten in den zweiten Betriebsmodus erfüllt, dass eine Wahrscheinlichkeit für das Verlassen der Fahrbahn 47 durch das Kraftfahrzeug 1 eine vorgegebene Mindestwahrscheinlichkeit übersteigt. Daher wechselt das Fahrerassistenzsystem 2 des Kraftfahrzeugs 1 in den zweiten Betriebsmodus und führt das Kraftfahrzeug 1 autonom zu der Zielposition 45, an der die Kurve durchfahren ist. Da es wie beschrieben nicht möglich ist, eine Trajektorie zu bestimmen, mit der die Kurve 44 auf der Fahrbahn 47 durchfahren werden kann, wird eine Trajektorie 46 bestimmt, die die Fahrbahn verlässt, das Kraftfahrzeug 1 aber dennoch sicher durch die Kurve 44 führt.

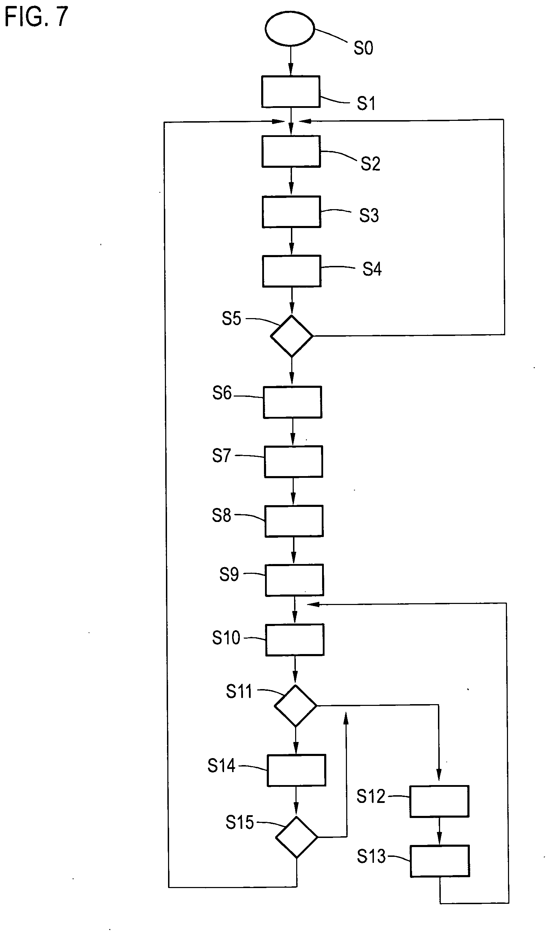

Fig. 7 zeigt ein Ablaufdiagramm eines Ausführungsbeispiels eines Verfahrens zum Führen eines Kraftfahrzeugs. Das Verfahren beginnt in Schritt S0 mit dem Fahrtbeginn. Am Beginn der Fahrt ist es in Schritt S1 möglich, dass der Fahrer einen Fahrmodus oder eine Fahrereigenschaft einstellt, wobei das Kraftfahrzeug beispielsweise auf ein besonders sportliches oder auf ein besonders komfortables Fahrverhalten eingestellt werden kann. Fahrer, die ein besonders sportliches Fahrverhalten wünschen, nutzen üblicherweise die Fahrbahn vollständig aus und empfinden es als unangenehm, wenn ein Fahrerassistenzsystem frühzeitig in den Fahrbetrieb eingreift. Für ein komfortableres Fahrerlebnis ist es hingegen vorteilhaft, wenn ein Fahrerassistenzsystem frühzeitig in den Fahrbetrieb eingreift und beispielsweise schon bei einer Wahrscheinlichkeit von 50 % für das Verlassen einer Fahrbahn oder sogar noch früher in den Fahrbetrieb eingreift.

In Schritt S2 wird während des laufenden Fahrbetriebs die Fahrereigenschaft anhand einer Auswertung der tatsächlich gefahrenen Trajektorien angepasst. Zudem kann beispielsweise durch eine Auswertung der Bedieneingaben oder durch zusätzliche Erfassungsmittel ein Fahrerzustand, insbesondere die Aufmerksamkeit oder die Müdigkeit eines Fahrers, ermittelt werden. Damit liegen dem Fahrerassistenzsystem stets aktuelle Fahrereigenschaften vor, aufgrund derer ein Eingreifpunkt des Fahrerassistenzsystems, an dem das Fahrerassistenzsystem in den zweiten Betriebsmodus wechselt, angepasst werden kann. Eine solche Anpassung ist möglich, indem eine Mindestwahrscheinlichkeit für ein Verlassen der Fahrbahn angepasst wird. Alternativ oder ergänzend kann der als Fahrbahn bewertete Bereich angepasst werden, indem beispielsweise befahrbare Randsteine als Teil einer Fahrbahn gewertet werden oder Teile der Fahrbahn am Rand der Fahrbahn als nicht befahrbar bewertet werden, um einen Sicherheitsbereich zwischen Kraftfahrzeug und Fahrbahnrand zu bilden.

In Schritt S3 werden vom Fahrerassistenzsystem durch Nutzung der Fahrzeugsensoren, der Kommunikationseinrichtung, des Positionssensors sowie interner Datenquellen Ego- und Umfelddaten ermittelt und es wird ein Umfeldmodell sowie ein Dynamikmodell für das eigene Kraftfahrzeug und weitere bewegte Objekte im Fahrzeugumfeld bestimmt.

Ausgehend von diesem Umfeldmodell wird in Schritt S4 eine Prognose berechnet, wie wahrscheinlich ein Verlassen der Fahrbahn ist. Eine Wahrscheinlichkeit für ein Verlassen der Fahrbahn kann berechnet werden, indem eine Zeit bis zum Verlassen der Fahrbahn bei gleichartigem Weiterfahren des Fahrers, also insbesondere bei Beibehaltung des Lenkwinkels, berechnet wird und die Wahrscheinlichkeit abhängig von diesem Zeitwert berechnet wird. Es wäre auch möglich, die physikalisch möglichen Trajektorien oder die in Abhängigkeit der Fahrereigenschaft erwarteten Trajektorien des Kraftfahrzeugs zu berechnen und Wahrscheinlichkeiten für diese zu berechnen.

In Schritt S5 wird überprüft, ob die Wahrscheinlichkeit für das Verlassen der Fahrbahn eine Mindestwahrscheinlichkeit übersteigt oder das Kraftfahrzeug die Fahrbahn bereits verlassen hat. Sind beide Bedingungen nicht erfüllt, so wird das Verfahren ab Schritt S2 fortgesetzt. Wird die Fahrbahn verlassen oder ist ein Verlassen der Fahrbahn wahrscheinlich, so wird in Schritt S6 ein Hinweis an den Fahrer ausgegeben. Zudem kann über eine Kommunikationseinrichtung des Kraftfahrzeugs auch ein Hinweis an weitere Kraftfahrzeuge im Umfeld ausgegeben werden, das das Kraftfahrzeug die Fahrbahn voraussichtlich verlässt bzw. in den autonomen Fahrbetrieb wechselt, wodurch unerwartete Fahrmanöver möglich sind.

In Schritt S7 wird eine Zielposition für den autonomen Fahrbetrieb bestimmt. Die Zielposition S7 kann hierbei auch ein Zielbereich sein und die Zielposition kann im Laufe des weiteren Verfahrens auch angepasst werden. Die Zielposition gibt eine Position oder einen Bereich vor, der durch das Kraftfahrzeug im autonomen Betrieb erreicht werden soll. Da der Fahrtbetrieb fortgesetzt werden soll, wird die Zielposition derart gewählt, dass sie auf der Fahrbahn liegt, und derart, dass der Azimutwinkel zwischen Kraftfahrzeug und Fahrbahn unterhalb eines vorgegebenen Maximalwertes liegt, so dass ausgehend von der Zielposition eine kontrollierte Weiterfahrt durch den Fahrer ermöglicht ist. Bei der Bestimmung der Zielposition kann zudem der Straßenverlauf berücksichtigt werden, so das an der Zielposition die Führung des Kraftfahrzeugs gut an den Fahrer übergeben werden kann. Insbesondere soll eine Rückübergabe in Kurven oder in ähnlich komplexen Fahrsituationen vermieden werden. Zudem wird bei der Bestimmung der Zielposition eine Prognose für die Verkehrssituation an der Zielposition berücksichtigt. Zusätzlich zur Zielposition können Zielwerte für weitere Parameter des Kraftfahrzeugs, insbesondere die Fahrzeuggeschwindigkeit, festgelegt werden.

In Schritt S8 wird eine Steuertrajektorie berechnet, die das Kraftfahrzeug zur Zielposition führt. Die Steuertrajektorie kann, wie im Folgenden erläutert, dynamisch, insbesondere abhängig von der aktuellen Fahrsituation, angepasst werden. Eine Steuertrajektorie kann mit einem üblichen Optimierungsverfahren, insbesondere einem "Best-First"-Verfahren, bestimmt werden. Bei der Bestimmung der Steuertrajektorie wird das zuvor berechnete Umfeldmodell sowie das Dynamikmodell für das Kraftfahrzeug selbst und weitere bewegte Hindernisse berücksichtigt, um sicherzustellen, dass das Kraftfahrzeug derart geführt wird, dass ein Sicherheitsabstand zu Hindernissen gewahrt bleibt und die Fahrparameter des Kraftfahrzeugs innerhalb der physikalischen Grenzen liegen.

Nach Ermittlung der Steuertrajektorie wechselt das Fahrerassistenzsystem in Schritt S9 in den zweiten Betriebsmodus, in dem das Kraftfahrzeug autonom geführt wird, indem die Steuertrajektorie ausgeführt wird. Zur Ausführung der Steuertrajektorie steuert das Fahrerassistenzsystem zumindest die Lenkung des Kraftfahrzeugs, insbesondere übernimmt das Kraftfahrzeug jedoch die gesamte Querführung oder gar die gesamte Quer- und Längsführung des Kraftfahrzeugs.

Das Fahren der Steuertrajektorie erfolgt in Schritt S10. In Schritt S11 wird nach einem gewissen Zeitintervall überprüft ob eine Rückschaltbedingung erfüllt ist. Die Rückschaltbedingung kann wie oben beschrieben insbesondere auswerten, ob sich das Kraftfahrzeug vollständig auf der Straße befindet, ob der Azimutwinkel zwischen Kraftfahrzeug und Straße unterhalb eines vorgegebenen Grenzwertes liegt, ob die Straßenführung und/oder die Verkehrssituation eine sichere Rückgabe der Fahrzeugführung an den Fahrer erlauben und ob die Wahrscheinlichkeit für ein Verlassen der Fahrbahn durch das Kraftfahrzeug unterhalb der vorgegebenen Maximalwahrscheinlichkeit liegt.

Wird in Schritt S11 ermittelt, dass die Rückschaltbedingung nicht erfüllt ist, so werden in Schritt S12 erneut Umfeld- und Egodaten erfasst und das Umfeldmodell sowie das Dynamikmodell des eigenen Kraftfahrzeugs sowie der weiteren bewegten Hindernisse wird aktualisiert. Dies erfolgt wie zu Schritt S3 beschrieben.

In Schritt S13 wird soweit notwendig die Steuertrajektorie aktualisiert. Die Berechnung einer aktualisierten Trajektorie kann wie zu Schritt S8 beschrieben erfolgen. Nach der optionalen Aktualisierung der Steuertrajektorie wird das Verfahren in Schritt S10 mit dem weiteren Fahren der Steuertrajektorie fortgesetzt.

Ist die Rückschaltbedingung in Schritt S11 erfüllt, so wird in Schritt S14 ein Hinweis an den Fahrer gegeben, dass eine Rückübernahme der Fahrzeugführung möglich und gewünscht ist. In Schritt S15 wird dann überprüft ob eine Fahrerhandlung erfasst wurde, die auf eine Rückübernahme durch den Fahrer hinweist. Ergänzend kann überprüft werden, ob der momentane Lenkradwinkel dem Lenkwinkel entspricht. Bei Nichterfüllen der Bedingungen für eine Rückübernahme durch den Fahrer wird das Verfahren in Schritt S12 fortgesetzt. Da eine Rückübernahme durch den Fahrer noch nicht möglich ist muss der autonome Fahrtbetrieb fortgesetzt werden, d. h. dass Umfeld- und Egodaten aktualisiert werden, die Steuertrajektorie angepasst wird und die Steuertrajektorie gefahren wird.

Wurde in Schritt S15 ermittelt, dass eine Rückübernahme möglich ist, so wechselt das Fahrerassistenzsystem in den ersten Betriebsmodus und das Verfahren wird mit Schritt S2 fortgesetzt.

## Patentansprüche

1. Kraftfahrzeug, umfassend wenigstens ein Fahrerassistenzsystem (2), wobei das Kraftfahrzeug (1) in einem ersten Betriebsmodus des Fahrerassistenzsystems (2) durch einen Fahrer steuerbar ist,
**dadurch gekennzeichnet,**
**dass** das Fahrerassistenzsystem (2) ausgebildet ist, bei einem durch Auswertung von das Kraftfahrzeug (1) betreffenden Egodaten und/oder das Kraftfahrzeugumfeld betreffenden Umfelddaten mit einer Wahrscheinlichkeit, die eine vorgegebene Mindestwahrscheinlichkeit übersteigt, ermittelten zukünftigen und/oder einem erfolgten Verlassen der Fahrbahn (21, 27, 33, 40, 47) temporär in einen zweiten Betriebsmodus umzuschalten, in dem die Lenkung des Kraftfahrzeugs (1) ohne Eingriffsmöglichkeit durch den Fahrer autonom durch das Fahrerassistenzsystem (2) erfolgt, wobei das Fahrerassistenzsystem (2) im zweiten Betriebsmodus zur Bestimmung einer Position innerhalb der Fahrbahn als Zielposition (24, 31, 37, 43, 45) für den autonomen Fahrbetrieb ausgebildet ist, an der die prognostizierte Verkehrssituation, nämlich die Straßenführung, eine sichere Rückübergabe der Fahrzeugführung an den Fahrer erlaubt.

2. Kraftfahrzeug nach Anspruch 1,
**dadurch gekennzeichnet,**
**dass** das das Fahrerassistenzsystem (2) zur Bestimmung einer Position zur Zielposition (24, 31, 37, 43, 45) ausgebildet ist, an der ein prognostizierter Azimutwinkel zwischen Kraftfahrzeug (1) und Fahrbahn (21, 27, 33, 40, 47) einen vorgegebenen Maximalwert unterschreitet.

3. Kraftfahrzeug nach einem der vorangehenden Ansprüche,
**dadurch gekennzeichnet,**
**dass** das Fahrerassistenzsystem (2) zum Umschalten vom zweiten in den ersten Betriebsmodus bei vorliegen wenigstens einer Rückschaltbedingung ausgebildet ist, wobei die oder eine der Rückschaltbedingungen ist, dass sich das Kraftfahrzeug (1) vollständig auf der Fahrbahn (21, 27, 33, 40, 47) befindet und/oder dass ein vorgegebener Azimutwinkel zwischen Kraftfahrzeug (1) und Fahrbahn (21, 27, 33, 40, 47) unterschritten ist und/oder dass die Verkehrssituation eine sichere Rückgabe der Fahrzeugkontrolle an den Fahrer erlaubt und/oder dass die Zielposition (24, 31, 37, 43, 45) erreicht ist.

4. Kraftfahrzeug nach einem der vorangehenden Ansprüche,
**dadurch gekennzeichnet,**
**dass** das Fahrerassistenzsystem (2) zur Bestimmung einer Steuertrajektorie (25, 32, 35, 42, 46) zwischen dem momentanen Ort des Kraftfahrzeugs (1) und der Zielposition (24, 31, 37, 43, 45) und zur Steuerung des Kraftfahrzeugs (1) entlang der Steuertrajektorie (25, 32, 35, 42, 46) im zweiten Betriebsmodus ausgebildet ist.

5. Kraftfahrzeug nach einem der vorangehenden Ansprüche,
**dadurch gekennzeichnet,**
**dass** das Fahrerassistenzsystem (2) im zweiten Betriebsmodus zur autonomen Steuerung der Bremssysteme (15, 16) und/oder des Motors (17) und/oder des vorzugsweise automatischen Getriebes (18) des Kraftfahrzeugs (1) ohne Eingriffsmöglichkeit durch den Fahrer ausgebildet ist.

6. Kraftfahrzeug nach einem der vorangehenden Ansprüche,
**dadurch gekennzeichnet,**
**dass** das Kraftfahrzeug (1) wenigstens ein lenkbares Hinterrad (48) aufweist, wobei das Fahrerassistenzsystem im zweiten Betriebsmodus zur Steuerung des Lenkwinkels des lenkbaren Hinterrads (48) ausgebildet ist.

7. Kraftfahrzeug nach Anspruch 6,
**dadurch gekennzeichnet,**
**dass** das Fahrerassistenzsystem (2) im zweiten Betriebsmodus zur separaten Steuerung eines Lenkwinkels wenigstens eines Vorderrads und eines Lenkwinkels wenigstens eines Hinterrads (48) ausgebildet ist.

8. Kraftfahrzeug nach einem der vorangehenden Ansprüche,
**dadurch gekennzeichnet,**
**dass** das Fahrerassistenzsystem (2) zum Ansteuern einer Hinweiseinrichtung (13) zur Gabe eines akustischen, haptischen und/oder optischen Hinweises beim Umschalten in den zweiten Betriebsmodus und/oder vor Umschalten in den ersten Betriebsmodus, als Hinweis zur Fahrerübernahme, ausgebildet ist.

9. Kraftfahrzeug nach einem der vorangehenden Ansprüche,
**dadurch gekennzeichnet,**
**dass** es eine Kommunikationseinrichtung (8) zur drahtlosen Fahrzeug-zu-Fahrzeugkommunikation und/oder zur drahtlosen Fahrzeug-zu-Infrastrukturkommunikation aufweist, wobei das Fahrerassistenzsystem (2) zur Ermittlung von Umgebungsdaten durch Ansteuerung der Kommunikationseinrichtung (8) zur Kommunikation mit Informationsquellen und/oder zur Kommunikation mit anderen Kraftfahrzeugen (23) zur Übertragung von Warnhinweisen, insbesondere beim Umschalten in den zweiten Betriebsmodus, ausgebildet ist.

10. Kraftfahrzeug nach einem der vorangehenden Ansprüche,
**dadurch gekennzeichnet,**
**dass** das Fahrerassistenzsystem (2) bei einem Umschalten vom zweiten Betriebsmodus in den ersten Betriebsmodus zum Warten auf eine Eingabe eines Fahrers zur Fahrerübernahme und einem Umschalten in den ersten Modus erst nach einer erkennbaren Fahreraktion, die eine Rückübernahme anzeigt, ausgebildet ist.

11. Verfahren zur Steuerung eines Kraftfahrzeugs, umfassend wenigstens ein Fahrerassistenzsystem, wobei das Kraftfahrzeug in einem ersten Betriebsmodus des Fahrerassistenzsystems durch einen Fahrer steuerbar ist, umfassend die Schritte:
- Erfassen von das Kraftfahrzeug betreffenden Egodaten und/oder das Kraftfahrzeugumfeld betreffenden Umfelddaten,
- Ermitteln, ob das Kraftfahrzeug eine Fahrbahn verlassen hat oder die Fahrbahn zukünftig mit einer Wahrscheinlichkeit, die eine vorgegebene Mindestwahrscheinlichkeit überschreitet, verlassen wird durch Auswertung der Egodaten und/oder der Umfelddaten durch das Fahrerassistenzsystem, und in diesem Fall
- temporäreres Umschalten des Fahrerassistenzsystems in den zweiten Betriebsmodus
- autonomes Lenken des Kraftfahrzeugs ohne Eingriffsmöglichkeit des Fahrers durch das Fahrerassistenzsystem im zweiten Betriebsmodus, wobei durch das Fahrerassistenzsystem eine Position innerhalb der Fahrbahn als Zielposition für den autonomen Fahrbetrieb bestimmt wird, an der die prognostizierte Verkehrssituation, nämlich die Straßenführung, eine sichere Rückübergabe der Fahrzeugführung an den Fahrer erlaubt.

## Claims

1. Motor vehicle, comprising at least one driver assistance system (2), wherein the motor vehicle (1) is controllable in a first operating mode of the driver assistance system (2) by a driver,
**characterised in that**
the driver assistance system (2) is configured to temporarily switch over to a second operating mode in the case of leaving the lane (21, 27, 33, 40, 47) carried out and/or determined in the future by evaluating egodata relating to the motor vehicle (1) and/or environmental data relating to the motor vehicle's environment with a probability, which exceeds a predefined minimum probability, in which second operating mode the steering of the motor vehicle (1) takes place autonomously by the driver assistance system (2) without possibility of intervention by the driver, wherein the driver assistance system (2) is configured in the second operating mode to determine a position inside the lane as the target position (24, 31, 37, 43, 45) for the autonomous driving operation, for which the predicted traffic situation, namely the road guidance, allows safe return of the vehicle control to the driver.

2. Motor vehicle according to claim 1,
**characterised in that**
the driver assistance system (2) is configured to determine a position for the target position (24, 31, 37, 43, 45) at which a predicted azimuth angle between motor vehicle (1) and lane (21, 27, 33, 40, 47) falls short of a predefined maximum value.

3. Motor vehicle according to any one of the preceding claims,
**characterised in that**
the driver assistance system (2) is configured to switch over from the second operating mode to the first operating mode when there is at least one switch-back condition, wherein the or a switch-back condition(s) is where the motor vehicle (1) is fully in the lane (21, 27, 33, 40, 47) and/or **in that** a predefined azimuth angle between motor vehicle (1) and lane (21, 27, 33, 40, 47) is not met and/or **in that** the traffic situation allows a safe return of the vehicle control to the driver and/or **in that** the target position (24, 31, 37, 43, 45) is reached.

4. Motor vehicle according to any one of the preceding claims,
**characterised in that**
the driver assistance system (2) is configured to determine a control trajectory (25, 32, 35, 42, 46) between the current position of the motor vehicle (1) and the target position (24, 31, 37, 43, 45) and to control the motor vehicle (1) along the control trajectory (25, 32, 35, 42, 46) in the second operating mode.

5. Motor vehicle according to any one of the preceding claims,
**characterised in that**
the driver assistance system (2) is configured in the second operating mode to autonomously control the brake systems (15, 16) and/or the motor (17) and/or the preferably automatic transmission (18) of the motor vehicle (1) without the possibility of intervention by the driver.

6. Motor vehicle according to any one of the preceding claims,
**characterised in that**
the motor vehicle (1) has at least one steerable rear wheel (48), wherein the driver assistance system is configured in the second operating mode to control the steering angle of the steerable rear wheel (48).

7. Motor vehicle according to claim 6,
**characterised in that**
the driver assistance system (2) is configured in the second operating mode to separately control a steering angle of at least one front wheel and a steering angle of at least one rear wheel (48).

8. Motor vehicle according to any one of the preceding claims,
**characterised in that**
the driver assistance system (2) is configured to actuate a notification device (13) to emit an acoustic, haptic and/or optical notification when switching over to the second operating mode and/or before switching over to the first operating mode, as a notification for the driver to take over.

9. Motor vehicle according to any one of the preceding claims,
**characterised in that**
it has a communication device (8) for wireless vehicle to vehicle communication and/or for wireless vehicle to infrastructure communication, wherein the driver assistance system (2) is configured to determine environmental data by actuating the communication device (8) to communicate with information sources and/or to communicate with other motor vehicles (23) to transmit warning notifications, in particular when switching over to the second operating mode.

10. Motor vehicle according to any one of the preceding claims,
**characterised in that**
the driver assistance system (2) is configured when switching over from the second operating mode to the first operating mode to wait for an input from a driver for the driver to take over and when switching over to the first mode only after a discernible action from the driver, which indicates a takeover.

11. Method for controlling a motor vehicle, comprising at least one driver assistance system, wherein the motor vehicle is controllable in a first operating mode of the driver assistance system by a driver, comprising the steps:
- identifying egodata relating to the motor vehicle and/or environmental data relating to the motor vehicle's environment,
- determining whether the motor vehicle has left a lane or will leave the lane in the future with a probability, which exceeds a predefined minimum probability, by evaluating the egodata and/or the environmental data by way of the driver assistance system, and in this case
- temporarily switching the driver assistance system over to the second operating mode
- autonomously steering the motor vehicle without the possibility of intervention by the driver by way of the driver assistance system in the second operating mode, wherein a position within the lane is determined by the driver assistance system as the target position for the autonomous driving operation, for which the predicted traffic situation, namely the road guidance, allows a safe return of the vehicle control to the driver.

## Revendications

1. Véhicule automobile, comprenant au moins un système d'assistance au conducteur (2), dans lequel le véhicule automobile (1) peut être commandé dans un premier mode de fonctionnement du système d'assistance au conducteur (2) par un conducteur,
**caractérisé en ce**
**que** le système d'assistance au conducteur (2) est réalisé pour commuter temporairement dans un deuxième mode de fonctionnement, lors d'une sortie de la chaussée (21, 27, 33, 40, 47) à venir et/ou ayant eu lieu déterminée par évaluation de données Ego concernant le véhicule automobile (1) et/ou de données d'environnement concernant l'environnement de véhicule automobile avec une probabilité qui excède une probabilité minimum prédéfinie, dans lequel le pilotage du véhicule automobile (1) a lieu de manière autonome par le système d'assistance au conducteur (2) sans possibilité d'intervention par le conducteur, dans lequel le système d'assistance au conducteur (2) est réalisé dans le deuxième mode de fonctionnement pour la détermination d'une position à l'intérieur de la chaussée en tant que position cible (24, 31, 37, 43, 45) pour le mode de conduite autonome, au niveau de laquelle la situation de trafic prévue, à savoir le tracé de route, permet une restitution sûre du guidage de véhicule au conducteur.

2. Véhicule automobile selon la revendication 1,
**caractérisé en ce**
**que** le système d'assistance au conducteur (2) est réalisé pour la détermination d'une position en tant que position cible (24, 31, 37, 43, 45), au niveau de laquelle un angle d'azimut prévu entre le véhicule automobile (1) et la chaussée (21, 27, 33, 40, 47) sous-dépasse une valeur maximum prédéfinie.

3. Véhicule automobile selon l'une quelconque des revendications précédentes,
**caractérisé en ce**
**que** le système d'assistance au conducteur (2) est réalisé pour la commutation du deuxième au premier mode de fonctionnement en présence d'au moins une condition de retour, dans lequel la ou une des conditions de retour est que le véhicule automobile (1) se trouve entièrement sur la chaussée (21, 27, 33, 40, 47) et/ou qu'un angle d'azimut prédéfini entre le véhicule automobile (1) et la chaussée (21, 27, 33, 40, 47) est sous-dépassé et/ou que la situation de trafic permet une restitution sûre du contrôle de véhicule au conducteur et/ou que la position cible (24, 31, 37, 43, 45) est atteinte.

4. Véhicule automobile selon l'une quelconque des revendications précédentes,
**caractérisé en ce**
**que** le système d'assistance au conducteur (2) est réalisé pour la détermination d'une trajectoire de commande (25, 32, 35, 42, 46) entre le lieu momentané du véhicule automobile (1) et la position cible (24, 31, 37, 43, 45) et pour la commande du véhicule automobile (1) le long de la trajectoire de commande (25, 32, 35, 42, 46) dans le deuxième mode de fonctionnement.

5. Véhicule automobile selon l'une quelconque des revendications précédentes,
**caractérisé en ce**
**que** le système d'assistance au conducteur (2) est réalisé dans le deuxième mode de fonctionnement pour la commande autonome des systèmes de freinage (15, 16) et/ou du moteur (17) et/ou de la boîte de vitesse (18) de préférence automatique du véhicule automobile (1) sans possibilité d'intervention par le conducteur.

6. Véhicule automobile selon l'une quelconque des revendications précédentes,
**caractérisé en ce**
**que** le véhicule automobile (1) présente au moins une roue arrière (48) dirigeable, dans lequel le système d'assistance au conducteur dans le deuxième mode de fonctionnement est réalisé pour la commande de l'angle de braquage de la roue arrière (48) dirigeable.

7. Véhicule automobile selon la revendication 6,
**caractérisé en ce**
**que** le système d'assistance au conducteur (2) dans le deuxième mode de fonctionnement est réalisé pour la commande séparée d'un angle de braquage d'au moins une roue avant et d'un angle de braquage d'au moins une roue arrière (48).

8. Véhicule automobile selon l'une quelconque des revendications précédentes,
**caractérisé en ce**
**que** le système d'assistance au conducteur (2) est réalisé pour la commande d'un dispositif d'indication (13) pour l'émission d'une indication acoustique, haptique et/ou optique lors de la commutation dans le deuxième mode de fonctionnement et/ou avant la commutation dans le premier mode de fonctionnement, en tant qu'indication sur la prise en charge par le conducteur.

9. Véhicule automobile selon l'une quelconque des revendications précédentes,
**caractérisé en ce**
**qu'**il présente un dispositif de communication (8) pour la communication sans fil véhicule-véhicule et/ou pour la communication sans fil véhicule-infrastructure, dans lequel le système d'assistance au conducteur (2) est réalisé pour la détermination de données d'environnement par commande du dispositif de communication (8) pour la communication avec des sources d'information et/ou pour la communication avec d'autres véhicules automobiles (23) pour la transmission d'avertissements, en particulier lors de la commutation dans le deuxième mode de fonctionnement.

10. Véhicule automobile selon l'une quelconque des revendications précédentes,
**caractérisé en ce**
**que** le système d'assistance au conducteur (2) est réalisé lors d'une commutation du deuxième mode de fonctionnement au premier mode de fonctionnement pour l'attente d'une saisie d'un conducteur pour la prise en charge par le conducteur et une commutation dans le premier mode seulement après une action de conducteur reconnaissable, qui affiche une reprise en charge.

11. Procédé de commande d'un véhicule automobile, comprenant au moins un système d'assistance au conducteur, dans lequel le véhicule automobile peut être commandé dans un premier mode de fonctionnement du système d'assistance au conducteur par un conducteur, comprenant les étapes de :
- détection de données Ego concernant le véhicule automobile et/ou de données d'environnement concernant l'environnement de véhicule automobile,
- le fait de déterminer si le véhicule automobile a quitté une chaussée ou va quitter la chaussée à l'avenir avec une probabilité qui excède une probabilité minimum prédéfinie, par évaluation des données Ego et/ou des données d'environnement par le système d'assistance au conducteur, et dans ce cas
- commutation temporaire du système d'assistance au conducteur dans le deuxième mode de fonctionnement,
- pilotage autonome du véhicule automobile sans possibilité d'intervention du conducteur par le système d'assistance dans le deuxième mode de fonctionnement, dans lequel une position est déterminée à l'intérieur de la chaussée en tant que position cible pour le mode de conduite autonome par le système d'assistance au conducteur, au niveau de laquelle la situation de trafic prévue, à savoir le tracé de route, permet une restitution sûre du guidage de véhicule au conducteur.
